(19) Europäisches Patentamt

European Patent Office

Office européen des brevets

(11) Veröffentlichungsnummer: **0 257 379**
**A2**

(12) **EUROPÄISCHE PATENTANMELDUNG**

(21) Anmeldenummer: **87111287.6**

(22) Anmeldetag: **05.08.87**

(51) Int. Cl.4: **H04N 3/15**

(30) Priorität: **19.08.86 DE 3628147**

(43) Veröffentlichungstag der Anmeldung:
**02.03.88 Patentblatt 88/09**

(84) Benannte Vertragsstaaten:
**FR GB NL**

(71) Anmelder: **KAPPA messtechnik GmbH**
**Waldstrasse 23**
**D-3407 Gleichen-Reinhausen(DE)**

(72) Erfinder: **Gerner, Rudolf, Dr.**
**Zietenstrasse 21**
**D-1000 Berlin 30(DE)**

(74) Vertreter: **Rehberg, Elmar, Dipl.-Ing.**
**Patentanwälte, Dipl.-Ing. R. Bibrach Dipl.-Ing.**
**E. Rehberg Postfach 7 38 Pütterweg 6**
**D-3400 Göttingen(DE)**

(54) **Verfahren zum Aufnehmen und Speichern von Bildern in schneller Folge.**

(57) Ein Verfahren zum Aufnehmen und Speichern von Bildern in schneller Folge sieht vor, daß die Bilder mit Hilfe einer Optik auf dem Aufnahmebereich eines CCD-Bildaufnehmers (1) abgebildet und jeweils als Ladungsbilder in den Speicherbereich des CCD-Bildaufnehmers verschoben und zweilenweise mittels eines Registers (7) ausgelesen werden. Zur Erhöhung der Bildfolge-Frequenz wird die aus Aufnahmebereich und Speicherbereich gebildete Fläche des CCD-Bildaufnehmers in einen insoweit verkleinerten Teil-Aufnahmebereich (2) und in mindestens zwei Teil-Speicherbereiche (3, 4, 5) unterteilt. Das erste Bild aus dem Teil-Aufnahmebereich (2) wird über die Folge der Teil-Speicherbereiche (3, 4, 5) schrittweise verschoben und jedes folgende Bild wird mit dem Freiwerden des Teil-Aufnahmebereichs (2) und der Teil-Speicherbereiche nachfolgend schrittweise verschoben, bis die Fläche des CCD-Bildaufnehmers (1) mit Ladungen besetzt ist.

Fig. 1

## Verfahren zum Aufnehmen und Speichern von Bildern in schneller Folge

Die Erfindung bezieht sich auf ein Verfahren zum Aufnehmen und Speichern von Bildern in - schneller Folge, indem die Bilder mit Hilfe einer Optik auf dem Aufnahmebereich eines CCD-Bildaufnehmers, der nach dem Frametransfer-Prinzip arbeitet, abgebildet und jeweils als Ladungsbilder in den Speicherbereich des CCD-Bildaufnehmers verschoben und zeilenweise mittels eines Registers ausgelesen werden. Ziel der Erfindung ist das Gewinnen von gespeicherten Bildern, die in - schneller Folge entstanden sind, jedoch in langsamer Folge (Zeitlupeneffekt) betrachtet oder anderswie ausgewertet werden können.

Ein Verfahren der eingangs beschriebenen Art kann mit Hilfe der Geräte der üblichen Fernsehtechnik durchgeführt werden. Dabei werden 50 Halbbilder pro Sekunde nach europäischer Norm bzw. 60 Halbbilder/sec. nach amerikanischer Norm entsprechend der unterschiedlichen Frequenz registriert. Dabei werden die Bilder mit Hilfe einer Optik auf einen CCD-Bildaufnehmer abgebildet. Der CCD-Bildaufnehmer ist in einen Aufnehmbereich und in einen Speicherbereich unterteilt. Im Aufnahmebereich werden je nach den Helligkeitswerten des Bildes Ladungen erzeugt und bereitgestellt. Es findet ein Verschieben dieser Ladungen in den Speicherbereich statt. An den Speicherbereich schließt sich ein Register an, in welchem die verschiedenen Ladungen zeilenweise ausgelesen werden.

Für viele industrielle Anwendungen genügt die Bildfolge-Frequenz der üblichen Fernsehtechnik nicht mehr und es werden höhere Bildfolge-Frequenzen angestrebt, um eine bessere Zeitauflösung zu erreichen. Dem steht bei der normalen Fernsehtechnik im Wege, daß einerseits ein - schnelleres Auslesen zu wesentlichen höheren Signalfrequenzen führt und andererseits die Registrierung nicht mehr mit normalen Geräten normgerecht bearbeitet werden kann.

In der Fernseh-Video-Technik ist es bekannt, die Auslesung des Bildes auf der Kameraseite mit einem schnelleren Takt durchzuführen, wenn nicht standardgemäß mit einer Frequenz von 50 Hz gearbeitet wird. So gestattet es beispielsweise die Verwendung eines Taktgenerators mit einer Frequenz von 100 oder 200 Hz, die doppelte oder vierfache Bildfolge-Frequenz zu erreichen. Bei paralleler Verarbeitung von mehreren Bildern, also bei gleichzeitigem Auslesen mehrerer Zeilen wurde eine Bildefolge-Frequenz bis zu 10.000 Bildern/sec. erreicht, allerdings mit einem Aufwand von 24 parallel arbeitenden Videorekordern. Der Geräteaufwand erhöht sich hier erheblich, wobei gleichzeitig der Nachteil auftritt, daß ein kontinuierliches Arbeiten nicht möglich ist, sondern Informationslücken notwendigerweise in Kauf genommen werden müssen.

Auch die Hochgeschwindigkeitsfotografie beschäftigt sich mit der Aufnahme und dem Speichern von Bildern in schneller Folge zum Zwecke der Zeitlupenbetrachtung. Dabei werden Drehprismen, Kameras, rotierende Trommeln o. dgl. eingesetzt, so daß es letztendlich möglich ist, mit solchen Elementen auf mechanischem Wege eine Bildfolge-Frequenz von $1 \times 10^6$ Bildern/sec. aufzulösen. Setzt man zusätzlich elektronische Hilfsmittel ein, so wird die Bildfolge-Frequenz noch einmal um den Faktor 10 erhöht, dann allerdings nur mit wenigen Bildern in einer Folge, z. B. 10 Bildern bei stark reduzierter Auflösung gegenüber fotografischen Verfahren. Diese elektronischen Hilfsmittel sind bisher so, daß ein Bild auf eine Fotokathode projiziert wird. Diese wird dann elektronen-optisch mit einer Bildverstärkeroptik auf einem Phosphorschirm abgebildet. Anschließend kann durch Variation der elektronen-optischen Abbildung mit schneller Zeitfolge im Submikrosekundenbereich das Bild auf dem Phosphorschirm verschoben werden. Damit wird die Zeitauflösung erreicht.

Der Erfindung liegt die Aufgabe zugrunde, ein Verfahren der eingangs beschriebenen Art so weiterzubilden, daß im wesentlichen unter Beibehaltung gerätetechnisch bekannter Bauteile eine höhere Bildfolge-Frequenz erreicht wird, um eine gedehntere Zeitlupendarstellung von schnellen Vorgängen zu ermöglichen.

Erfindungsgemäß wird dies dadurch erreicht, daß die aus Aufnahmebereich und Speicherbereich gebildete Fläche des CCD-Bildaufnehmers 1 in einen insoweit verkleinerten Teil-Aufnahmebereich 2 und in mindestens zwei Teil-Speicherbereiche 3, 4, 5 unterteilt wird, und daß das erste Bild 9 aus dem Teil-Aufnahmebereich 2 über die Folge der Teil-Speicherbereiche 3, 4, 5 schrittweise verschoben wird und jedes folgende Bild 10, 11, 12 mit dem jeweiligen Freiwerden des Teil-Aufnahmebereichs 2 in diesem gebildet und mit dem Freiwerden der jeweils anschließenden Teil-Speicherbereiche 3, 4, 5 nachfolgend schrittweise verschoben wird, bis alle Teilbereiche 2, 3, 4, 5 des CCD-Bildaufnehmers 1 mit Ladungen besetzt sind. Das erfindungsgemäße Verfahren teilt einen bekannten CCD-Bildaufnehmer in anderer Weise ein und benutzt dessen dann anders fungierende Bereiche abweichend zur bisherigen Benutzung. Während bisher der CCD-Bildaufnehmer einen Aufnahmebereich und auch einen einzigen, gleichgroß ausgebildeten Speicherbereich aufweist, an den noch ein Ausleseregister für das zeilenweise Auslesen anschließt, wird die neue Einteilung in der Weise vorgenommen, daß nur ein einzelner Teil-Aufnahmebereich, dagegen eine Mehrzahl bw. Vielzahl von Teil-Speicherbereichen gebildet sind. In der einfachsten Aufteilung erstreckt sich der Teil-Aufnahmebereich über ein Drittel der Fläche des CCD-Bildaufnehmers, während diesem einen Teil-Aufnahmebereich zwei Teil-Speicherbereiche, jeweils in gleicher Größe, zugeordnet sind, die somit zwei Drittel der Fläche ausmachen. Die nächstmögliche Aufteilung sieht einen Teil-Aufnahmebereich in der Größe eines Viertels der Fläche, sowie diesem zugeordnet drei Teil-Speicherbereiche vor. Allein durch diese Aufteilung ergibt sich in dem zuletzt genannten Fall eine Verdopplung der Bildfolge-Frequenz. Das Bild wird also um die Hälfte kleiner, jedoch wird die Bildfolge-Frequenz verdroppelt. Entsprechend ist es möglich, die Bildgröße auf 1/4 zu reduzieren und damit die Bildfolge-Frequenz zu vervierfachen usw. Das im Teil-Aufnahmebereich entstehende Ladungs-Bild wird nun in den ersten Teil-Speicherbereich, benachbart zu dem Teil-Aufnahmebereich, verschoben, wodurch der Teil-Aufnahmebereich wieder bereit wird zur Aufnahme des zweiten Bildes. Anschließend werden das erste abgespeicherte Bild aus dem ersten Teil-Speicherbereich in den zweiten Teil-Speicherbereich verschoben sowie das zweite Bild aus dem Teil-Aufnahmebereich in den ersten Teil-Speicherbereich überführt. Entsprechendes geschieht jeweils schrittweise mit den folgenden Bildern, bis die Fläche des CCD-Bildaufnehmers mit Ladungen besetzt ist. Das Auslesen der in den verschiedenen Teil-Speicherbereichen gespeicherten Bilder geschieht in üblicher Weise mittels eines Ausleseregisters. Hier kann normale Fernsehtechnik Anwendung finden, so daß eine Registrierung auf handelsüblichen Videorekordern, Bildverarbeitungs-Geräten usw. möglich ist. Werden dagegen nicht standardgemäße Geräte eingesetzt, also beispielsweise solche mit einer Taktgenerator-Frequenz von 100 oder 200 Hz, dann erhöht sich hierdurch die Bildfolge-Frequenz nochmals um den Faktor 2 oder 4.Weiterhin ist bei dem erfindungsgemäßen Verfahren vorteilhaft, daß keine speziellen Bildaufnehmer entwickelt werden müssen. Es können vielmehr diese komplizierten und hochintegrierten Bausteine in ihrer Standardform verwendet werden. Die zeitlichen Abstände zwischen den einzelnen Bildern sind durch die maximalen Taktraten des CCD-Bildaufnehmers und seiner Ansteuerung ersichtlich. Die Zeiten zwischen zwei Bildern liegen derzeit im Bereich von 100 Mikrosekunden und sind damit schneller als bisherige Hochgeschwindigkeitsverfahren.

Insbesondere ist es möglich, den Aufnahmebereich des CCD-Bildaufnehmers in einen insoweit verkleinerten Teil-Anfnahmebereich und in einen oder mehrere Teil-Speicherbereiche zu unterteilen, wobei der Speicherbereich des CCD-Bildaufnehmers in mindestens zwei Teil-Speicherbereiche unterteilt wird. Hier entsteht bei geringstmöglicher Unterteilung ein Teil-Aufnahmebereich mit der Hälfte der bisherigen Größe, dem drei Teil-Speicherbereiche zugeordnet sind. Damit wird die Bildfolge-Frequenz verdoppelt. In diesem einfachsten Fall der Unterteilung ist auch ein kontinuierliches Arbeiten möglich, d. h. es können halb so große Bilder mit doppelter Bildfolge-Frequenz kontinuierlich aufgenommen und verarbeitet werden. Auch das Speichern sowie eine weitere Verarbeitung mit herkömmlichen Techniken ist möglich.

Die Steigerung der Bildfolge-Frequenz und die Unterteilung des Aufnahmebereichs einerseits und des Speicherbereichs andererseits kann in reziprokem Verhältnis zueinander durchgeführt werden. Auch dabei ergibt sich die Möglichkeit einer kontinuierlichen Aufnahme und Verarbeitung der Bilder.

Andererseits ist es möglich, daß die Folge der Bilder in eine Bildsequenz mit hoher Bildfolge-Frequenz und eine Informationslücke unterteilt wird, wobei die Anzahl der Bilder einer Bildsequenz durch die Summe der anzahl der Teil-Aufnahmebereiche und der Teil-Speicherbereiche begrenzt ist. Hiermit ist es möglich, unter Inkaufnahme eines diskontinuierlichen Arbeitens mit sehr hoher Bildfolge-Frequenz zu arbeiten und gleichsam Bildgruppen innerhalb einer Bildsequenz zusammenzufassen, worauf dann eine Informationslücke entsteht, bis wiederum eine Bildsequenz auf einem dann ausgelesenen CCD-Bildaufnehmer aufgenommen werden kann.

Die Erfindung wird anhand der Zeichnungen weiter vereutlicht und beschrieben. Es zeigen:

Figur 1 eine schematische Darstellung eines CCD-Bildaufnehmers,

Figur 2 die zeitliche Abfolge der Benutzung des Bildaufnehmers bisher,

Figur 3 die zeitliche Abfolge der neuen Benutzung eines CCD-Bildaufnehmers bei kontinuierlicher Arbeitsweise,

Figur 4 die zeitliche Abfolge der neuen Benutzung eines CCD-Bildaufnehmers bei diskontinuierlicher Arbeitsweise und

Figur 5 eine schematische Darstellung der Vorrichtungsanordnung.

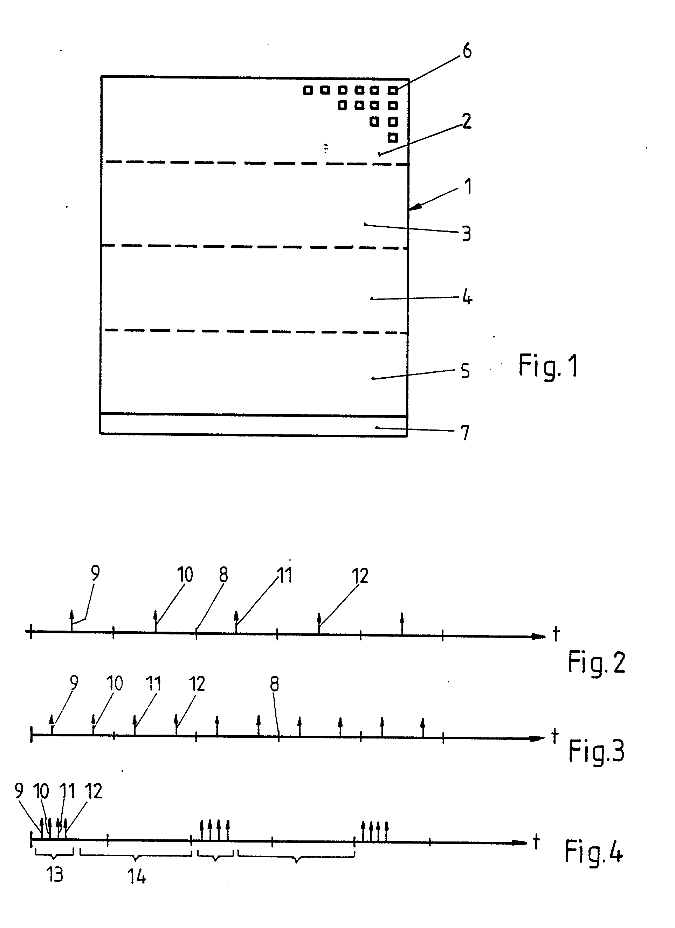

In Figur 1 ist schematisch ein CCD-Bildaufnehmer (1) dargestellt. Dessen bisher als Aufnahmebereich wirksamer Teil seiner Fläche ist in einen Teil-Aufnahmebereich (2) und einen ersten Teil-Speicherbereich (3) unterteilt. Der bisherige Speichbereich ist in einen zweiten Teil-Speicherbereich (4) und einen dritten Teil-Speicherbereich (5) unterteilt.

Die Bereiche (2, 3, 4, 5) besitzen jeweils gleiche Größe bzw. Aufnahme-Kapazität. Einzelne Ladungspunkte (6) sind in jedem der Bereiche (2, 3, 4, 5) in üblicher Weise zeilen- und spaltenweise vorgesehen. Abweichend von der bisherigen Nutzung eines CCD-Bildaufnehmers steht nur der Teil-Aufnahmebereich (2) für die Belichtung mit den Bildern zur Verfügung, während die Teil-Speicherbereiche (3, 4, 5) zum Abspeichern der jeweils verschobenen Ladungen dienen.

Bei der Aufnahme des Bildes wird dieses auf den Teil-Aufnahmebereich (2) geworfen, wodurch in den Ladungspunkten (6) die entsprechenden Ladungen bereitgestellt werden. Diese Ladungen werden schrittweise durch die Teil-Speicherbereiche (3, 4, 5) geschoben. Sobald die Ladungen des ersten Bildes in dem Teil-Aufnahmebereich (2) in den Teil-Speicherbereich (3) verschoben sind, steht der Teil-Aufnahmebereich (2) für die zweite Aufnahme bzw. das zweite Bild zur Verfügung. Auch dieses wird dann schrittweise weiter verschoben. Ebenso ergeht es dem dritten und dem vierten Bild, bis Bereiche (2, 3, 4, 5) jeweils mit Ladungen angefüllt sind. Der CCD-Bildaufnehmer weist ein Register (7) zum zweilenweisen Auslesen auf. Erst wenn sämtliche Zeilen des Teil-Speicherbereichs (5) ausgelesen sind, kann beispielsweise die Ladungsanordnung aus dem Teil-Speicherbereich (4) in einem Schritt in den Teil-Speicherbereich (5) verschoben werden. Bei dem in Figur 1 dargestellten Beispiel ist die Fläche des CCD-Bildaufnehmers (1) in einen Teil-Aufnahmebereich (2) und in drei Teil-Speicherbereiche (3, 4, 5) unterteilt. In der einfachsten Form könnte auch eine Unterteilung der Fläche des CCD-Bildaufnehmers in nur drei gleichgroße Bereiche vorgenommen sein, wobei einem 1/3 einnehmenden Teil-Aufnahmebereich dann lediglich zwei Teil-Speicherbereiche nachgeordnet wären. Natürlich ist es auch möglich und sinnvoll, auch noch andere Unterteilungen vorzunehmen. Beispielsweise kann der Teil-Aufnahmebereich (2) auch nochmals halbiert auf 1/8 der Fläche des CCD-Bildaufnehmers - schrumpfen, so daß dann 7 Teil-Speicherbereiche nachgeschaltet sind. Für diesen Fall der Unterteilung ergibt sich die 4fache Bildfolge-Frequenz bei kontinuierlicher Arbeitsweise.

Figur 2 verdeutlicht die bisher bekannte Arbeitsweise eines CCD-Bildaufnehmers. Innerhalb einer Zeiteinheit (8) wird zunächst ein erstes Bild (9) auf den Aufnahmebereich abgebildet und nachfolgend in den Speicherbereich verschoben, so daß das zweite Bild (10) im Aufnahmebereich aufgenommen werden kann. Es folgt das Auslesen des Speicherbereichs über das Register (7). Sobald der Speicherbereich völlig ausgelesen ist, können die das zweite Bild (10) repräsentierenden Ladungen aus den Aufnahmebereich in den Speicherbereich verschoben werden, so daß der Aufnahmebereich für ein drittes Bild (11) frei wird, nach dessen Verschiebung das vierte Bild (12) aufgenommen und entsprechend behandelt werden kann. Man sieht also, daß innerhalb der Zeiteinheit (8) zwei Bilder verarbeitet werden können.

Aus Figur 3 ist die zeitliche Abfolge der Bilder mit dem gemäß Figur 1 unterteilten CCD-Bildaufnehmer (1) ersichtlich. Durch die hälftige Unterteilung im Aufnahmebereich und im Speicherbereich tritt eine Verdopplung der Bildfolge-Frequenz ein. Innerhalb der Zeiteinheit (8) können also hier bereits die vier Bilder (9, 10, 11, 12) verarbeitet werden. Die Zeiteinheit (8) ist durch die Arbeitsgeschwindigkeit des Registers (7) festgelegt. Wenn der Aufnahmebereich des CCD-Bildaufnehmers (1) in vier Teilbereiche und ebenso der Speicherbereich ebenfalls in vier Teilbereiche unterteilt wird, ist eine 4fache Bildfolge-Frequenz erreichbar usw.

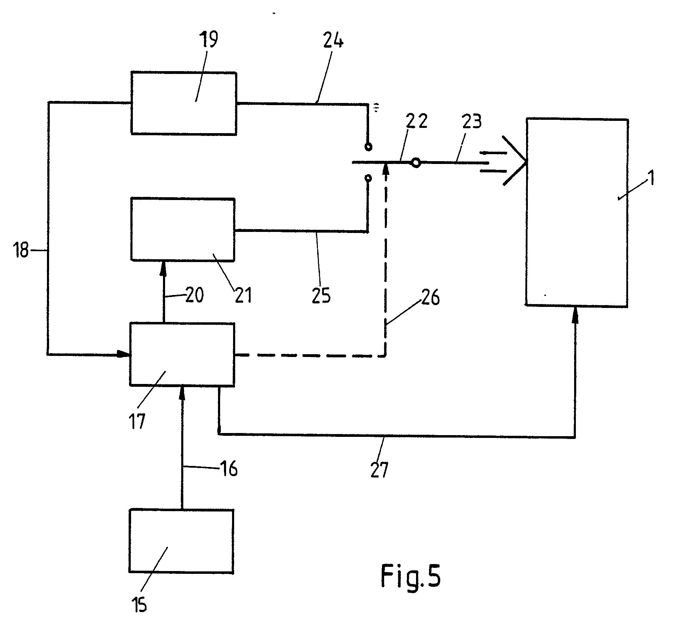

Figur 4 verdeutlicht eine diskontinuierliche Arbeitsweise, die mit dem CCD-Bildaufnehmer (1) gemäß Figur 1 ebenfalls möglich ist. Die Bilder (9, 10, 11, 12) können in sehr schneller zeitlicher Abfolge jeweils hintereinander auf dem Teil-Aufnahmebereich (2) aufgenommen und ihr Informationsinhalt bzw. die entsprechenden Ladungen in die Teil-Speicherbereiche (3, 4, 5) verschoben werden, bis die gesamte Fläche des CCD-Bildaufnehmers (1) mit Ladungen besetzt ist. Die Bilder (9, 10, 11, 12) werden hier zu einer Bildsequenz (13) zusammengefaßt, an die sich eine Informationslücke (14) anschließt. Bilder, die in dieser Informationslücke (14) entstehen oder entstehen würden, können mit dem CCD-Bildaufnehmer gemäß Figur 1 nicht gespeichert werden, weil dieser bereits ausgenutzt ist. Erst nach Beendigung einer Zeiteinheit (8) und dem vollständigen Auslesen der Ladungsverteilung der vier Bilder können in einer erneuten Zeiteinheit wiederum vier Bilder mit schneller zeitlicher Folge, also gleicher Bildfolge-Frequenz aufgenommen und gespeichert werden, so daß sich der beschriebene Vorgang wiederholt. Bei diesem diskontinuierlichen Arbeiten müssen notwendigerweise Informationslücken (14) inkauf genommen werden. Dafür ist eine sehr hohe Bildfolge-Frequenz erreichbar. Natürlich läßt eine weitere, d. h. feinere Unterteilung des CCD-Bildaufnehmers (1) die Möglichkeit offen, die Anzahl der Bilder innerhalb einer Bildsequenz (13) zu erhöhen.

In Figur 5 ist in schematischer Weise die Schaltungsanordnung der wesentlichen Elemente der Vorrichtung zur Durchführung des Verfahrens dargestellt. In einer Eingabestation (15) wird der Start und die Länge der Bildsequenz (13) und der einzelnen Bilder (9, 10, 11, 12) festgelegt und über eine Leitung (16) eine Steuereinheit (17) angesteuert. Von der Steuereinheit (17) führt eine Leitung (18) zu einem Standardtaktgenerator (19) sowie eine Leitung zu einem einstellbaren Taktgenerator (21). Über die leitungen (18, 19) wird die Synchronisation der Generatoren (19, 21) betrieben. Den Generatoren (19 und 21) nachgeordnet ist ein elektronischer Schalter (22) vorgesehen, der über eine Leitung (23) an den CCD-Bildaufnehmer (1) angeschlossen ist. Eine Leitung (24) führt vom Standardtaktgenerator (19) zu dem Schalter (22), so daß über diese Leitung die normalen Ansteuertakte entsprechend der Frequenz des Standardtaktgenerators (19) ausgesteuert und auf den Bildaufnehmer (1) gegeben werden können. Analog ist eine Leitung (25) vorgesehen, über die modifizierte Ansteuertakte des einstellbaren Taktgenerators (21) wahlweise vermittels des Schalters (22) auf den Bildaufnehmer (1) gelangen können. Die Schaltung des Schalters (22) wird von der Steuereinheit (17) über eine Leitung (26) gesteuert. Es ist weiterhin mgölich, über eine Leitung (27) eine Blendensteuerung vorzusehen, also eine Abdeckung des CCD-Bildaufnehmers (1). Damit ist es möglich, je nach Anwendungsfall mit der gleichen Vorrichtung auch eine unterschiedliche Einteilung des CCD-Bildaufnehmers (1) einzustellen, um je nach Einstellung unterschiedlich hohe Bildfolge-Frequenzen zu ermöglichen. Es versteht sich, daß dabei die Größe des Teil-Aufnahmebereichs (2) variiert, und zwar jeweils in Abhängigkeit von der Blendensteuerung bzw. der Abdeckung des Aufnahmebereichs des CCD-Bildaufnehmers (1).

### Bezugszeichenliste:

1 = CCD-Bildaufnehmer
2 = Teil-Aufnahmebereich
3 = Teil-Speicherbereich
4 = Teil-Speicherbereich
5 = Teil-Speicherbereich
6 = Ladungspunkt
7 = Register
8 = Zeiteinheit
9 = erstes Bild
10 = zweites Bild
11 = drittes Bild
12 = viertes Bild
13 = Bildsequenz
14 = Informationslücke
15 = Eingabestation
16 = Leitung
17 = Steuereinheit
18 = Leitung
19 = Standardtaktgenerator
20 = Leitung
21 = einstellbarer Taktgenerator
22 = Schalter
23 = Leitung
24 = Leitung

25 = Leitung
26 = Leitung
27 = Leitung

### Ansprüche

1. Verfahren zum Aufnehmen und Speichern von Bildern in schneller Folge, indem die Bilder mit Hilfe einer Optik auf dem Aufnahmebereich eines CCD-Bildaufnehmers, der nach dem Frametransferprinzip arbeitet, abgebildet und jeweils als Ladungsbilder in den Speicherbereich des CCD-Bildaufnehmers verschoben und zeilenweise mittels eines Registers ausgelesen werden, dadurch gekennzeichnet, daß die aus Aufnahmebereich und Speicherbereich gebildete Fläche des CCD-Bildaufnehmers (1) in einen insoweit verkleinerten Teil-Aufnahmebereich (2) und in mindestens zwei Teil-Speicherbereiche (3, 4, 5) unterteilt wird, und daß das erste Bild (9) aus dem Teil-Aufnahmebereich (2) über die Folge der Teil-Speicherbereiche (3, 4, 5) schrittweise verschoben wird und jedes folgende Bild (10, 11, 12) mit dem jeweiligen Freiwerden des Teil-Aufnahmebereichs (2) in diesem gebildet und mit dem Freiwerden der jeweils anschließenden Teil-Speicherbereiche (3, 4, 5) nachfolgend schrittweise verschoben wird, bis alle Teilbereiche (2, 3, 4, 5) des CCD-Bildaufnehmers (1) mit Ladungen besetzt sind.

2. Verfahren nach Anspruch 1, dadurch gekennzeichnet, daß der Aufnahmebereich des CCD-Bildaufnehmers (1) in einen insoweit verkleinerten Teil-Aufnahmeber ich (2) und in einen oder mehrere Teil-Speicherbereiche (3) unterteilt wird, und daß der Speicherbereich des CCD-Bildaufnehmers (1) in mindestens zwei Teil-Speicherbereiche (4, 5) unterteilt wird.

3. Verfahren nach Anspruch 2, dadurch gekennzeichnet, daß die Steigerung der Bildfolge-Frequenz und die Unterteilung des Aufnahmebereichs einerseits und des Speicherbereichs andererseits in reziprokem Verhältnis zueinander durchgeführt werden.

4. Verfahren nach Anspruch 1 oder 2, dadurch gekennzeichnet, daß die Folge der Bilder (9, 10, 11, 12) einer Bildsequenz (13) durch die Summe der Anzahl des Teil-Aufnahmebereichs (2) und der Teil-Speicherbereiche (3, 4, 5) begrenzt ist.

5. Vorrichtung zur Durchführung des Verfahrens nach Anspruch 1, mit einer Optik und einem CCD-Bildaufnehmer sowie einer Steuereinheit mit einem Standardtaktgenerator, dadurch gekennzeichnet, daß zusätzlich ein einstellbarer Taktgenerator (21) vorgesehen ist, der wahlweise zu dem Standardtaktgenerator (19) über einen Schalter (22) an den CCD-Bildaufnehmer (1) anschließbar ist, wobei die Stellungen des Schalters (22) über die Steuereinheit (17) steuerbar sind.

6. Vorrichtung nach Anspruch 5, dadurch gekennzeichnet, daß der Steuereinheit (17) eine Eingabestation (15) für die Bestimmung des Starts und der Länge der Bildsequenz (13) bzw. der einzelnen Bilder (9, 10, 11, 12) vorgeordnet ist.

Fig. 1

Fig. 2

Fig. 3

Fig. 4

Fig.5